# EUROPÄISCHE PATENTSCHRIFT

(11) **EP 0 908 290 B1**
(45) Veröffentlichungstag und Bekanntmachung des Hinweises auf die Patenterteilung: **14.11.2001**
(21) Anmeldenummer: 98115568.2
(22) Anmeldetag: 19.08.1998
(51) Int. Cl.: B29C 47/10, B29C 47/92, G05B 19/12

(54) **Verfahren zum Mischen mehrerer granulat- und/oder pulverförmiger Komponenten**
Process for blending several granulated and/or powdery components
Procédé pour mélanger plusieurs composantes granulées et/ou pulvérisées

(30) Priorität: 08.10.1997 DE 19744443
(43) Veröffentlichungstag der Anmeldung: 14.04.1999
(73) Patentinhaber: Windmöller & Hölscher, D-49525 Lengerich (DE)
(72) Erfinder: Saatkamp, Richard, 49525 Lengerich (DE)

(56) Entgegenhaltungen:
- EP-A- 0 214 666
- EP-A- 0 447 233
- US-A- 4 820 962

## Beschreibung

Die Erfindung betrifft ein Verfahren zum Mischen mehrerer Granulat- und/oder pulverförmiger Komponenten mit vorgegebenem Mischungsverhältnis mit einer jeder Komponente zugeordneten Dosierschnecke mit auswechselbarer Schneckenwelle, die die Komponenten aus einem Vorratsbehälter abzieht und die durch einen Motor antreibbar ist, und mit einem Rechner (gemäß Oberbegriff des Patentanspruchs 1).

Ferner betrifft die Erfindung ein Verfahren zum Mischen mehrerer granulat- und/oder pulverförmiger komponenten gemäß dem Oberbegriff des Patentansprüchs 2.

Verfahren dieser Art sind bekannt.

Beispielsweise zur Herstellung von Profilen aus Kunststoff oder zur Herstellung von Blasfolien müssen häufig einem Extruder Mischungen von Kunststoffgranulaten mit einem bestimmten vorgegebenen Mischungsverhältnis zugeführt werden. Um diese Mischungen herzustellen, werden aus verschiedenen Vorratsbehältem durch Dosierschnecken Granulate mit vorbestimmten Mengenstrom abgezogen und in einen gemeinsamen Schacht oder einen Einlauftrichter unter Mischung der Komponenten eingeleitet.

Um die einzelnen Komponenten aus den einzelnen Vorratsbehältem mit veränderlichem Mengenstrom entsprechend dem gewünschten Mischungsverhältnis abziehen zu können, sind die Dosierschnecken üblicherweise mit leicht austauschbaren Schneckenwellen versehen, die unterschiedliche Förderleistungen haben. Den einzelnen Dosierschnecken läßt sich nun aber von außen nicht ansehen, mit welcher Schneckenwelle sie versehen sind und mit welcher Förderleistung diese daher arbeiten. Kommt es zu Verwechslungen der Schneckenwellen oder zu einer fehlerhaften Angabe der in einer Dosierschnecke vorhandenen Schneckenwelle, kann die Mischung nicht mit dem bestimmten Mischungsverhältnis hergestellt werden. Wird diese fehlerhafte Mischung sodann einem Extruder zugeführt, wird Ausschuß produziert.

Aufgabe der Erfindung ist es daher, ein Verfahren und eine Vorrichtung zu schaffen, die es ausschließen, daß es durch den Einbau unzutreffender Schneckenwellen in Dosierschnecken zu Mischungen von Granulaten und/oder Pulvem mit unrichtigem Mischungsverhältnis kommt.

Erfindungsgemäß wird diese Aufgabe bei einem Verfahren der eingangs angegebenen Art dadurch gelöst, daß in den Rechner die in den beteiligten Vorratsbehältem gespeicherten Komponenten eingegeben und dem Rechner von Sensoren, die Markierungen der Schneckenwellen abtasten, die Förderleistung der Dosierschnecken betreffende Daten zugeführt werden, und daß der Rechner den Dosierbetrieb unterbricht und/oder ein Alarmsignal abgibt, wenn die Förderleistung mindestens einer Dosierschnecke nicht dem vorgegebenen Mischungsverhältnis entspricht.

Bei dem erfindungsgemäßen Verfahren erkennt der den Mischbetrieb steuernde Rechner sofort den Einbau einer unrichtigen Schneckenwelle in eine Dosierschnekke, so daß der Dosierbetrieb sofort unterbrochen werden kann oder ein Alarmsignal abgegeben wird. Da der Rechner über die den einzelnen Schneckenwellen zugeordneten Sensoren Meldungen über deren Leistung erhält, kann über einen Monitor auch sofort die Schneckenwelle mit unrichtigen Leistungsdaten bezeichnet werden.

Die Förderleistung der Dosierschnecken hängt nun nicht nur von den Daten der Schneckenwelle, also der Steigung und Höhe der Schrieckengänge, sondern auch von der Antriebsdrehzahl der Schneckenwelle ab.

Bei einem weiteren Verfahren der eingangs angegebenen Art, bei dem die die Schneckenwellen antreibenden Motore steuerbar sind, kann die gestellte Aufgabe dadurch gelöst werden, daß in den Rechner die in den beteiligten Vorratsbehältem gespeicherten Komponenten eingegeben und dem Rechner von Sensoren, die Markierungen der Schneckenwellen abtasten, die Förderleistung der Dosierschnecken betreffende Daten zugeführt werden und daß der Rechner zu Einstellung des vorgegebenen Mischungsverhältnisses über die steuerbaren Motore die Drehzahl der Schneckenwellen auf die erforderliche Drehzahl einstellt. Der Rechner erfaßt also über die die Markierungen der Schneckenwellen abtastenden Sensoren deren geometrische Daten und er stellt die Drehzahl der Schneckenwellen so ein, daß aufgrund der von den einzelnen Dosierschnecken geförderten Mengen das zutreffende Mischungsverhältnis erreicht wird.

Nun kann es vorkommen, daß aufgrund der geometrischen Daten einer in eine Dosierschnecke eingebauten Schneckenwelle die erforderliche Leistung durch Änderung der Antriebsdrehzahl nicht erreichbar ist. In einem solchen Fall ist vorgesehen, daß der Rechner den Dosierbetrieb unterbricht und/oder ein Alarmsignal abgibt, wenn das vorgegebene Mischungsverhältnis nicht einstellbar ist.

Ein Ausführungsbeispiel der Erfindung wird nachstehend anhand der Zeichnung näher erläutert. In dieser zeigt .
- Fig. 1: eine Seitenansicht einer Dosiervorrichtung, von der das Granulatgemisch über einen Schacht und einen Einlauftrichter einem Extruder zugeführt wird, der geschnitten dargestellt ist,
- Fig. 2: eine perspektivische Ansicht einer Schneckenwelle einer Dosierschnecke und
- Fig. 3: eine Rückansicht der Schneckenwelle nach Fig. 2.

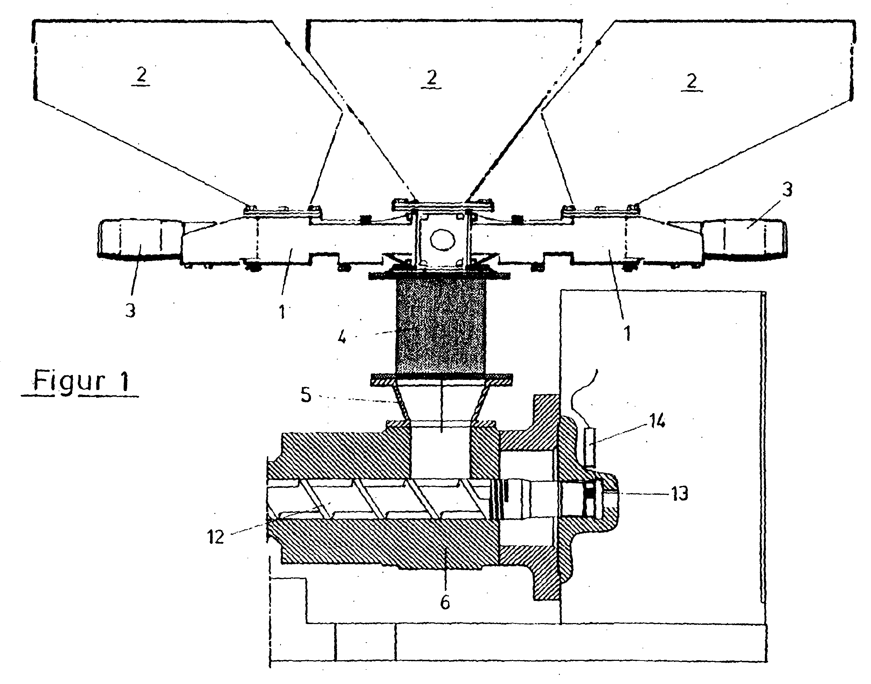

Die aus Fig. 1 ersichtliche Dosiervorrichtung besteht aus vier horizontal liegenden und im rechten Winkel in Form eines Kreuzes zueinander angeordneten Dosierschnecken 1, auf deren Einläufe trichterartige Vorratsbehälter 2 aufgesetzt sind. Die Schneckenwellen der einzelnen Dosierschnecken werden durch Elektromotore 3 angetrieben. Die Ausläufe der Dosierschnecken 1 münden in einen gemeinsamen Schacht 4 der mit Mischblechen versehen sein kann. Der Schacht 4 ist auf den Einlauftrichter 5 eines Extruders 6 aufgesetzt.

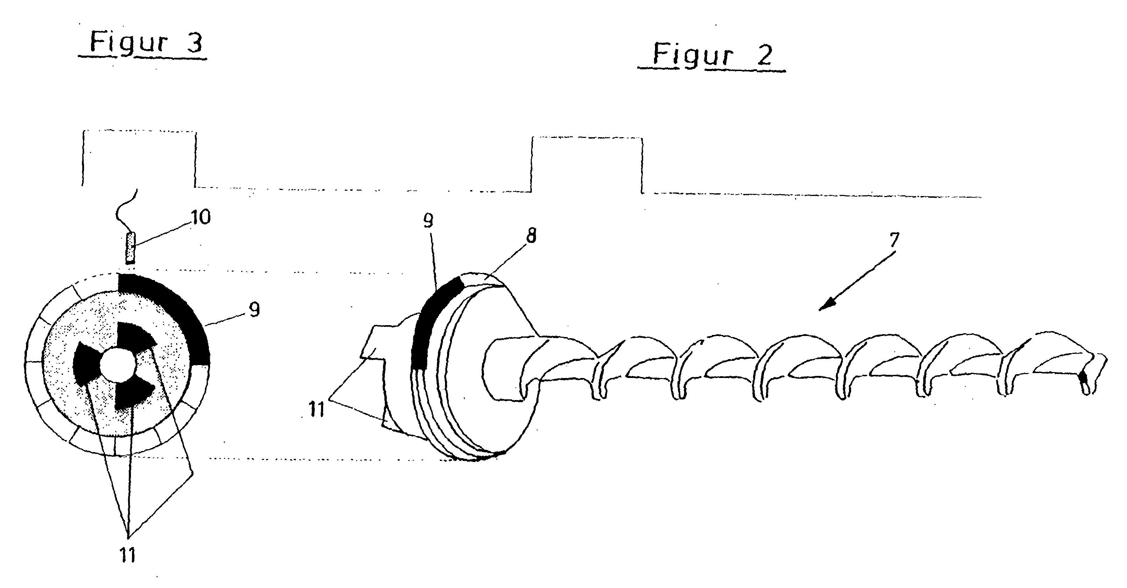

Die Schneckenwellen 7 der Dosierschnecken 1 sind an geeigneter Stelle mit Markierungen versehen. Bei dem Ausführungsbeispiel nach den Fig. 2 und 3 weist die Schneckenwelle 7 an ihrem dem Antrieb dienenden Ende scheibenartige Verbreiterungen 8 auf, die an ihrem äußeren Umfang über einen vorbestimmten Winkelbereich mit einer von einem Sensor abtastbaren Markierung 9 versehen sind. Der Sensor 10, der in das Gehäuse eingebaut sein kann, tastet die Markierung 9 ab und bestimmt aus dem Verhältnis der Länge der Markierung zu der Länge des markierungsfreien Umfangs der Scheibe 8 die charakteristischen Daten der Schneckenwelle 7, die dann einem nicht dargestellten Rechner zugeführt wird.

Die Schneckenwelle 7 ist an ihrem dem Antrieb dienenden Ende mit einer Klauenkupplung 11 versehen, die zum Antrieb der Schneckenwelle in Eingriff mit einem von einem Motor angetriebenen Gegenkupplungsstück gebracht wird.

In Fig. 1 ist auch die Schneckenwelle 12 des Extruders 6 an ihrem antriebsseitigen Ende mit Markierungen 13 versehen, die von einem Sensor 14 abgetastet werden. Diese Markierung und der Sensor 14 dienen jedoch nicht der Erfassung bzw. Einstellung des Mischungsverhältnisses.

## Patentansprüche

1. Verfahren zum Mischen mehrerer granulat- und/oder pulverförmiger Komponenten mit vorgegebenem Mischungsverhältnis mit einer jeder Komponente zugeordneten Dosierschnecke (1) mit auswechselbarer Schneckenwelle (7), die die Komponente aus einem Vorratsbehälter (2) abzieht und die durch einen Motor (3) antreibbar ist, und mit einem Rechner,
**dadurch gekennzeichnet,**
**daß** in den Rechner die in den beteiligten Vorratsbehältern (2) gespeicherten Komponenten kennzeichnende Daten eingegeben und dem Rechner von Sensoren (10), die Markierungen (9) der Schneckenwellen (7) abtasten, die Förderleistung der Dosierschnecken (1) betreffende Daten zugeführt werden und daß der Rechner den Dosierbetrieb unterbricht und/oder ein Alarmsignal abgibt, wenn die Förderleistung mindestens einer Dosierschnecke (1) nicht dem vorgegebenen Mischungsverhältnis entspricht.

2. Verfahren zum Mischen mehrerer granulat- und/oder pulverförmiger Komponenten mit vorgegebenem Mischungsverhältnis mit einer jeder Komponente zugeordneten Dosierschnecke (1) mit auswechselbarer Schneckenwelle (7), die die Komponente aus einem Vorratsbehälter (2) abzieht, mit die Schneckenwellen (7) antreibenden steuerbaren Motoren (3) und mit einem Rechner,
**dadurch gekennzeichnet,**
**daß** in den Rechner die in den beiliegenden Vorratsbehältern (2) gespeicherten Komponenten gekennzeichneten Daten eingegeben und dem Rechner von Sensoren (10), die Markierungen (9) der Schneckenwellen (7) abtasten, die Förderleistung der Dosierschnecke (1) treffende Daten zugeführt werden und daß der Rechner zur Einstellung des vorgegebenen Mischungsverhältnisses über die steuerbaren Motoren (3) die Drehzahl der Schneckenwellen (7) auf die erforderliche Drehzahl einstellt.

3. Verfahren nach Anspruch 2, **dadurch gekennzeichnet, daß** der Rechner den Dosierbetrieb unterbricht und/oder ein Alarmsignal abgibt, wenn das vorgegebene Mischungsverhältnis nicht einstellbar ist.

## Claims

1. Process for mixing a plurality of granulate and/or powder-form components in a predetermined mixing ratio with a metering screw (1) assigned to each component, having an interchangeable screw shaft (7), which draws the component out of a storage bin (2) and which can be driven by a motor (3), and with a computer, **characterized in that** data characterizing the components stored in the storage bins (2) involved are input into the computer and data pertaining to the transporting performance of the metering screws (1) are fed to the computer by sensors (10) which scan markings (9) of the screw shafts (7) and **in that** the computer interrupts the metering operation and/or emits an alarm signal if the transporting performance of at least one metering screw (1) does not correspond to the predetermined mixing ratio.

2. Process for mixing a plurality of granulate and/or powder-form components in a predetermined mixing ratio with a metering screw (1) assigned to each component, having an interchangeable screw shaft (7), which draws the component out of a storage bin (2), with controllable motors (3) driving the screw shafts (7), and with a computer, **characterized in that** data characterizing the components stored in the storage bins (2) involved are input into the computer and data pertaining to the transporting performance of the metering screws (1) are fed to the computer by sensors (10) which scan markings (9) of the screw shafts (7) and **in that**, for setting the predetermined mixing ratio, the computer sets the rotational speed of the screw shafts (7) to the required speed by means of the controllable motors (3).

3. Process according to Claim 2, **characterized in that** the computer interrupts the metering operation and/or emits an alarm signal if the predetermined mixing ratio cannot be set.

## Revendications

1. Procédé pour mélanger plusieurs composants granulés et/ou pulvérulents selon un rapport de mélange prédéterminé avec une vis de dosage (1) associée à chaque composant, à arbre de vis échangeable (7) qui retire le composant d'un réservoir (2) et qui peut être entraînée par un moteur (3), et avec un calculateur,
**caractérisé en ce que** sont entrées dans le calculateur les données caractérisant les composants stockés dans les réservoirs concernés (2) et que sont transmises au calculateur par des capteurs (10) qui détectent les marquages (9) des arbres de vis (7), des données concernant la puissance de convoyage des vis de dosage (1), et **en ce que** le calculateur interrompt le fonctionnement de dosage et/ou émet un signal d'alarme lorsque la puissance de convoyage d'au moins une vis de dosage (1) ne correspond pas au rapport de mélange prédéterminé.

2. Procédé pour mélanger plusieurs composants granulés et/ou pulvérulents selon un rapport de mélange prédéterminable avec une vis de dosage (1) associée à chaque composant, à arbre de vis échangeable (7), qui retire le composant d'un réservoir (2), avec des moteurs de commande (3) entraînant les arbres de vis (7) et avec un calculateur, **caractérisé en ce que** sont entrées dans le calculateur des données caractérisant les composants stockés dans les réservoirs concernés (2) et que sont transmises au calculateur, par les capteurs (10) qui détectent les marquages (9) des arbres de vis (7), les données concernant la puissance de convoyage de la vis de dosage (1) et **en ce que** le calculateur, pour le réglage du rapport de mélange prédéterminé, règle par les moteurs de commande (3) le nombre de tours des arbres de vis (7) au nombre de tours requis.

3. Procédé selon la revendication 2, **caractérisé en ce que** le calculateur interrompt le fonctionnement de dosage et/ou émet un signal d'alarme lorsque le rapport de mélange prédéterminé ne peut pas être réglé.
